**Europäisches Patentamt**

**European Patent Office**

**Office européen des brevets**

(19)

(11) Veröffentlichungsnummer: **0 230 495**
**B1**

(12) **EUROPÄISCHE PATENTSCHRIFT**

(45) Veröffentlichungstag der Patentschrift:
26.07.89

(21) Anmeldenummer: 86100951.2

(22) Anmeldetag: 24.01.86

(51) Int. Cl.⁴: **A43D 25/20**

(54) **Klebstoff-Aktiviergerät für Schuhe.**

(43) Veröffentlichungstag der Anmeldung:
05.08.87 Patentblatt 87/32

(45) Bekanntmachung des Hinweises auf die Patenterteilung:
26.07.89 Patentblatt 89/30

(84) Benannte Vertragsstaaten:
DE FR GB IT

(56) Entgegenhaltungen:
DE-A- 1 685 487
GB-A- 2 088 197
US-A- 2 450 956
US-A- 2 672 545

(73) Patentinhaber: **Funck, Herbert, Dr.-Ing., Am Wasserbogen 43, D-8032 Gräfelfing-Lochham(DE)**

(72) Erfinder: **Funck, Herbert, Dr.-Ing., Am Wasserbogen 43, D-8032 Gräfelfing-Lochham(DE)**

(74) Vertreter: **Patentanwälte Beetz sen. - Beetz jun. Timpe - Siegfried - Schmitt-Fumian, Steinsdorfstrasse 10, D-8000 München 22(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Klebstoff-Aktiviergerät für Schuhe, bestehend aus einer Halterung für die aufgeleisteten Oberschuhe und aus mehreren durch eine Steuerung aktivierbaren Heizstrahlern, die in vorbestimmtem Abstand zu der mit dem zu aktivierenden Klebstoff beschichteten Schuhfläche in einem Gehäuse angeordnet sind (siehe z.B. DE-A 1 685 487).

Zum Aufkleben von Schuhsohlen auf die Bodenfläche von aufgeleisteten Oberschuhen sind in der Regel beide Kontaktflächen mit einem thermoplastischen Klebstoff beschichtet. Kurz vor dem eigentlichen Klebevorgang in einer speziellen Presse muß der trockene Klebstoff-Film von zumindest einer Kontaktfläche aktiviert werden, um seine Klebekraft entfalten zu können. Zu diesem Zweck sind Aktiviergeräte bekannt, in denen meistens der Klebstoff-Film der Schuhsohlen aktiviert wird. Diese Geräte enthalten mehrere stabförmige Infrarot-Heizstrahler in einer Ebene, unter die die Schuhsohle mittels eines Haltemechanismus bewegt wird. Nach Bewegen der Schuhsohle in das Innere des Aktiviergeräts und Einschalten der Heizstrahler wird die Klebstoffschicht innerhalb weniger Sekunden auf etwa 80 °C erwärmt und so weit plastifiziert, daß gegenüber dem nicht aktivierten Klebstoff-Film an der Bodenfläche des Oberschuhs eine ausreichende Anfangshaftung besteht und sich bei der anschließenden Verpressung unter einem Druck von 2 bis 8 bar eine hochfeste Verbindung herstellt. Für Schuhe, deren Sohlen aus hitzeempfindlichem Material bestehen, sind auch Aktiviergeräte vorgeschlagen worden, mit denen der Klebstoff-Film an der Bodenfläche des aufgeleisteten Oberschuhs aktiviert werden kann.

Bekannte Aktiviergeräte bestehen in der Regel aus einem zumindest dreiseitig geschlossenen Gehäuse, in das die Schuhsohle bzw. seltener der aufgeleistete Oberschuh eingeführt wird. In einem vorbestimmten Abstand zur mit Klebstoff beschichteten Fläche sind die Infrarot-Heizstrahler flächig im Gehäuse installiert, so daß sie die gesamte Klebstoff-Fläche innerhalb der kurzen Aktivierzeit gleichmäßig aufheizen.

Bei verschiedenen Schuhtypen, beispielsweise bei Sport-, Freizeit- und Winterschuhwerk, haben sich in letzter Zeit sog. Schalensohlen durchgesetzt, die einen an der durchgehenden Laufsohle seitlich angeformten Rand von relativ großer Höhe aufweisen, der den unteren besonders hoch beanspruchten Teil des Oberschuhs umgibt und an diesen festhaftend angeklebt wird. Zur Aktivierung der seitlich an die Bodenfläche anschließenden - später von den Sohlenrändern überdeckten - Zonen des Oberschuhs sind die herkömmlichen Aktiviergeräte ungeeignet, weil aufgrund der flächigen Anordnung der Heizstrahler diese seitlichen Zonen in den zur Verfügung stehenden kurzen Zeitspannen nicht ausreichend hoch erwärmt werden können. Die Folge sind unzureichend feste Klebeverbindungen im Bereich der Sohlenränder und ein relativ großer Anteil an Ausschußware, da Nachklebungen nicht oder nur mit erheblichem manuellem Aufwand möglich sind. Ein weiteres wesentliches Problem hinsichtlich einer gleichmäßigen Aktivierung der den Sohlenrändern gegenüberliegenden Bereiche eines Oberschuhs ergibt sich beim Wechsel der Schuhtypen und Schuhgrößen. Während nämlich die Aktivierung der Klebstoffschicht auf der Sohleninnenfläche oder der quasi ebenen Schuhbodenfläche von den in herkömmlichen Aktiviergeräten parallel zu deren Deckwand oder Boden flächig angeordneten Heizstrahlern unabhängig von der jeweiligen Schuhgröße vorgenommen werden kann, müssen bei der Aktivierung der Klebstoffschicht an den an die Bodenfläche anschließenden Seitenrändern der aufgeleisteten Oberschuhe Vorkehrungen getroffen werden, um eine gleichmäßige Plastifizierung des Klebstoffs ohne Überhitzungen zu erreichen.

Aufgabe der Erfindung ist es, ein Klebstoff-Aktiviergerät für aufgeleistete Oberschuhe zu schaffen, das innerhalb der vorgegebenen kurzen Zeitspannen eine gleichmäßige Plastifizierung der auf die Schaftseitenränder aufgetragenen Klebstoffschicht ohne Überhitzungen od. dgl. ermöglicht.

Diese Aufgabe wird erfindungsgemäß dadurch gelöst, daß zwei U-förmig ausgebildete und mit ihren offenen Enden gegeneinander gerichtete Heizstrahler den aufgeleisteten Oberschuh zumindest teilweise umgeben und zur Anpassung an unterschiedliche Schuhgrößen gegeneinander verstellbar sind.

Durch die verstellbare Anordnung der den Schaftseitenrand des jeweiligen Oberschuhs in Form einer weitgehend geschlossenen Schleife umgebenden Heizstrahler wird eine gute Anpassung der abgestrahlten Heizenergie an unterschiedliche Schuhgrößen erreicht, wobei die verschiedenen Breiten der jeweiligen Schuhe in der Ballenpartie und in der Fersenpartie Berücksichtigung finden. Mit dem erfindungsgemäß ausgebildeten Aktiviergerät können auch die insbesondere bei modernen Sportschuhen mit Galoschierung des unteren Schaftrandes verwendeten Randstreifen mit der notwendigen Festigkeit an die Schaftseitenränder der aufgeleisteten Oberschuhe angeklebt werden.

In einer besonders bevorzugten Ausgestaltung des erfindungsgemäßen Heizgerätes sind die zwei U-förmig ausgebildeten Heizstrahler mit ihren offenen Enden gegeneinander gerichtet und können zur Anpassung an unterschiedliche Schuhgrößen in Längsrichtung gegeneinander verstellt werden, wobei sich zumindest in dem auf kleine Schuhgrößen eingeschobenen Zustand ihre Schenkelenden überlappen. Zweckmäßig haben die beiden U-förmigen Strahler unterschiedliche Schenkelweiten und sind in der Höhe im Gehäuse gegeneinander versetzt derart angeordnet, daß sich durch ihre in der Höhe überlappenden Schenkelenden im mittleren Schuhbereich eine doppelt breite Aktivierzone ausbildet.

Gemäß einer weiteren Ausgestaltung der Erfindung ist der für die Ballenpartie des Oberschuhs vorgesehene breitere Heizstrahler auf einem Einschub in einem Niveau unterhalb des schmaleren Fersen-Heizstrahlers angeordnet. Durch Verschieben dieses Einschubes kann der Längsabstand beider Strahler zur Aufnahme kleinerer oder größerer Schuhe bei Erreichen einer jeweils ausreichenden Heizenergie verstellt werden. Bei der Konzeption der Längsverstellung der beiden Heizstrahler wurde davon ausgegangen, daß sich die Längen unterschiedlicher Schuhgrößen in weit größerem Maße ändern als deren Breiten. So beträgt die Längenänderung zwischen einem kleinen Damenschuh und einem großen Herrenschuh etwa 100 mm, während die Breitendifferenz nur bei etwa 20 mm liegt. Demgegenüber beträgt der Breitenunterschied zwischen der Ballenpartie und der Fersenpartie eines mittleren Herrenschuhs etwa 30 mm, was erfindungsgemäß durch die unterschiedlichen Schenkelweiten der beiden U-förmigen Heizstrahler berücksichtigt wird.

Um ein sicheres Auflegen eines aufgeleisteten Oberschuhs mit der notwendigen Schnelligkeit durchführen zu können, sind bei einem Aktiviergerät gemäß der Erfindung, in welches der Oberschuh von oben mit nach unten weisender Bodenfläche eingesetzt wird, zumindest zwei Stützen vorgesehen, von denen die eine zusammen mit dem verstellbaren Heizstrahler zur Änderung ihres Abstandes zur zweiten Stütze horizontal verstellt wer den kann, um eine sichere Schuhauflage auch unterschiedlicher Schuhtypen zu gewährleisten. Zweckmäßig ist diese verstellbare Stütze an dem Einschub montiert und zusammen mit diesem verstellbar. Die Heizstrahler können nach unten weisend an Deckelteilen montiert sein, die einen mittigen Ausschnitt für eine Absenk- bzw. Anhebebewegung des aufgeleisteten Oberschuhs aufweisen. Um beim Verstellen der Heizstrahler zur Anpassung an unterschiedliche Schuhgrößen Berührungskontakte mit dem Oberschuh und dadurch hervorgerufene Überhitzungen zu vermeiden, sind Abstandshalter z. B. in Form von Rollen aus einem wärmefesten Kunststoff am Einschub ebenso wie am ortsfesten Gestell vorgesehen, welche den minimalen Abstand zwischen den Heizstrahlern und den Schaftseitenrändern des Oberschuhs festlegen. Diese Abstandshalter können zweckmäßig am Rand der Ausschnitte in den Deckeln angeordnet sein.

Zur Beschleunigung und Vereinfachung der Aktiviervorgänge sind den beiden Oberschuh-Stützen zweckmäßig gesonderte Hubvorrichtungen zugeordnet, die entweder mechanisch oder durch Druckmittel gemeinsam betätigt werden und den Oberschuh entsprechend dem Arbeitszyklus absenken bzw. bis über die Deckelöffnung anheben. Um einen automatischen Ablauf der verschiedenen Arbeitsgänge zu erzielen, kann einer der Auflagestützen für den Oberschuh ein Druckschalter zugeordnet sein, der durch die Auflage des Oberschuhs betätigt wird und die Hubvorrichtungen bzw. den elektrischen Kreis der Heizstrahler aktiviert.

Gemäß einer weiteren zweckmäßigen Ausgestaltung der Erfindung ist an der Stirnwand des Einschubs ein Handgriff aus einem wärmefesten Kunststoff angebracht, der eine einfache und schnelle Einstellung der Heizstrahler auf unterschiedliche Schuhtypen von Hand ermöglicht. Die einschubseitige Stirnwand des festen Geräteteils kann einen Begrenzungsanschlag für den Einschub aufweisen, der zusammen mit dem Deckel kastenförmig ausgebildet ist und auf ortsfesten Profilschienen bzw. Winkelleisten aus einem wärmefesten Kunststoff gleitet.

An der hohen Stirnwand des festen Geräteteils ist zweckmäßig durch einen Luftspalt oder eine Wärmeisolierschicht getrennt ein Gehäuse angebracht, in welchem die elektrischen bzw. pneumatischen Schaltgeräte, wie z. B. Hauptschalter, Startschalter, Aktivierzeituhr, Schaltrelais, Magnetventile usw., untergebracht sind. Die Aktivierzeituhr und die Hubvorrichtungen der Schuhstützen können mit dem Startschalter so gekoppelt sein, daß mit dem Startsignal der eingelegte Schuh abgesenkt wird, gleichzeitig die Aktivierzeit zu laufen beginnt und danach der Schuh wieder aus dem Gerät herausgehoben wird.

Um die Ansprechzeiten zu verkürzen und die Schaltorgane zu schonen, ist es bei Verwendung von Infrarot-Heizstrahlern mit kurzen Aufheizzeiten zweckmäßig, eine Sparschaltung von geringer Leistung und eine Aktivierschaltung hoher Leistung vorzusehen, wobei der Sparbetrieb durch Betätigen des Hauptschalters in Gang gesetzt wird und die Aktivierschaltung bei Betätigen der Zeituhr anspricht, so daß mit hoher Leistung nur wäh rend der kurzen Aktivierzeitspanne gefahren wird.

Die erfindungsgemäß ausgebildeten Heizstrahler können auch in ein herkömmliches Aktiviergerät integriert sein, so daß die Plastifizierung der Klebstoffschicht auf der Sohlenfläche bzw. der Schuhbodenfläche und an den Schuhschafträndern im gleichen Gerät erfolgt. Aufgrund einer geeigneten Folgesteuerung können diese Aktiviervorgänge vorteilhaft gleichzeitig oder aber zeitlich hintereinander ablaufen.

Im folgenden werden Ausführungsbeispiele der Erfindung anhand der Zeichnung im einzelnen beschrieben. Es zeigen:

Fig. 1, 2 das Prinzip der erfindungsgemäßen Klebstoffaktivierung des Schaftrandes eines aufgeleisteten Oberschuhs bei einer bevorzugten Ausführung;

Fig. 3 ein Aktiviergerät in schematischem Längsschnitt;

Fig. 4 das Aktiviergerät nach Fig. 3 in Draufsicht;

Fig. 5 das Aktiviergerät nach Fig. 3 im Querschnitt;

Fig. 6 den hinteren Teil eines Aktiviergeräts mit einer Fußstütze und einem Druckschalter;

Fig. 7 eine andere Ausführung des Aktiviergeräts im Längsschnitt;

Fig. 8 schematisch ein Kombinationsgerät.

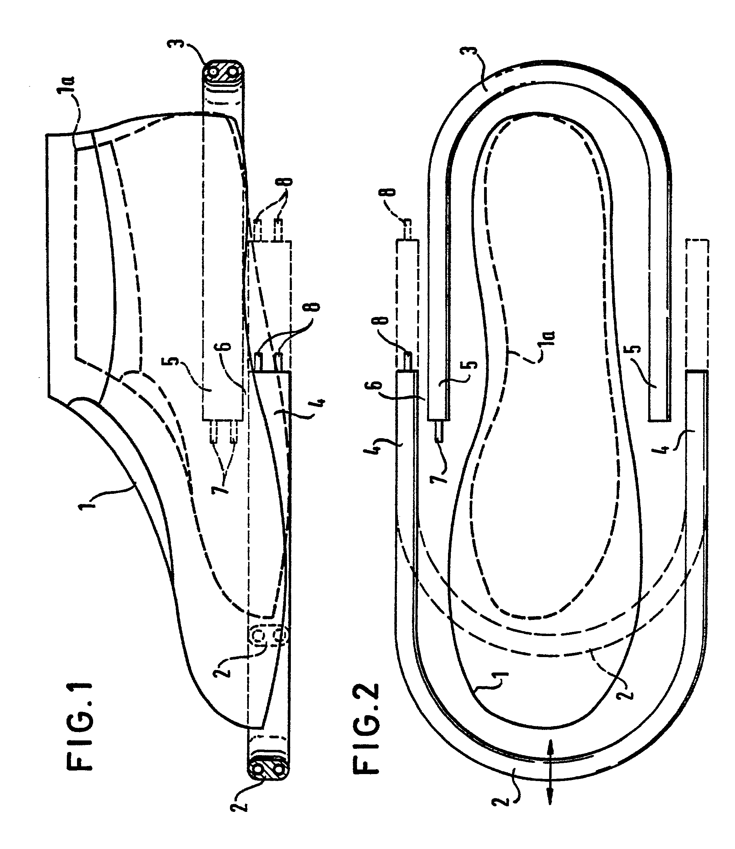

In den Fig. 1, 2 sind schematisch zwei aufgeleistete Oberschuhe 1, 1a von unterschiedlicher Größe dargestellt. Der Schaftseitenrand des jeweiligen Oberschuhs 1, 1a, an den später der aufstehende Rand einer Schalensohle angeklebt wird, verläuft vom tiefsten Punkt im Ballenbereich zur Ferse hin aufsteigend. Wie insbesondere aus Fig. 2 ersichtlich, wird der Oberschuh von zwei bandförmigen Heizstrahlern 2, 3 in Form einer geschlossenen ovalen Schlaufe umgeben, von denen der vordere Heizstrahler 2 den breiteren Ballenbereich des Schuhs mit etwa gleichem Zwischenabstand umschließt und eine entsprechend größere Breite als der den Fersenbereich des Schuhs umgebende hintere Heizstrahler 3 hat. Dadurch ergibt sich eine seitliche Überlappung der Schenkel 4 bzw. 5 beider Heizstrahler 2, 3 im mittleren Bereich des Schuhs. Entsprechend der Schräglage des Schaftrandes sind die beiden Heizstrahler 2, 3 in unterschiedlichen Höhen gegeneinander versetzt angeordnet, und zwar derart, daß der mittlere Überlappungsbereich 6 zu einer Verdopplung der wirksamen Strahlerbreite im mittleren Schuhbereich führt. An den Schenkelenden der Heizstrahler 2, 3 sind übliche Steckkontakte 7, 8 zum Anschluß von Kabeln vorgesehen. Wie dargestellt, ist der breitere vordere Heizstrahler 2 in Richtung des Doppelpfeils verschiebbar ausgebildet, so daß eine Lageanpassung dieses Heizstrahlers 2 an unterschiedlich große Oberschuhe vorgenommen werden kann.

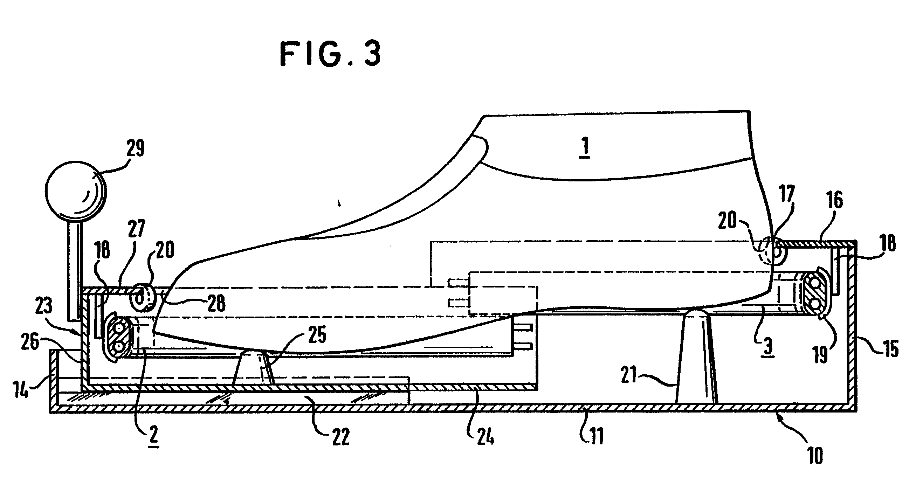

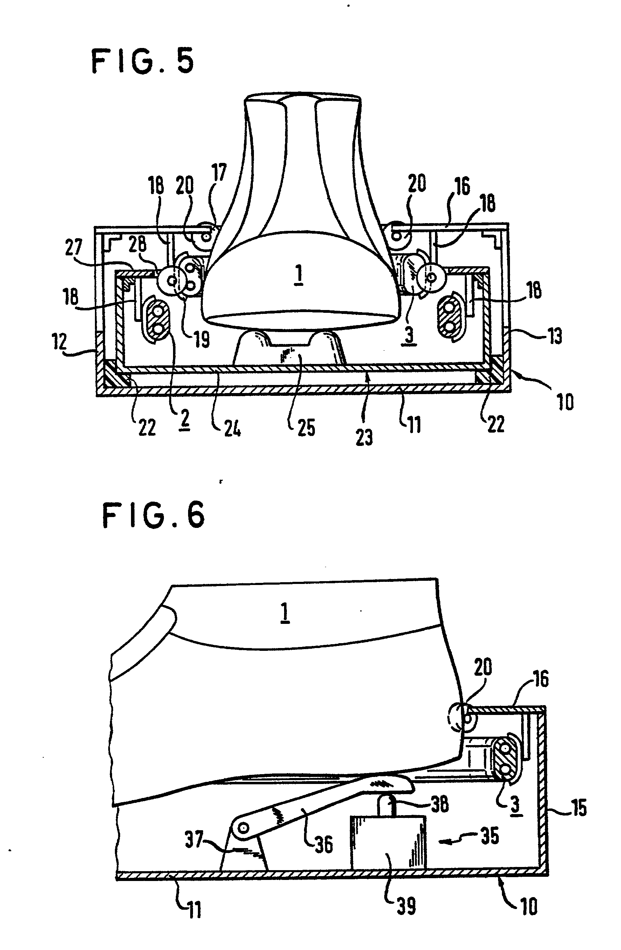

In Fig. 3 ist eine konkrete Ausführung eines Aktiviergerätes nach dem technischen Konzept gemäß Fig. 1, 2 dargestellt. Ein ortsfestes Gehäuse 10 weist eine Bodenplatte 11, Seitenwände 12, 13 (Fig. 5) sowie eine niedrigere vordere und eine höhere hintere Stirnwand 14, 15 auf. An den Oberkanten der hinteren Stirnwand 15 sowie der beiden Seitenwände 12, 13 ist ein Deckel 16 befestigt, in welchem ein Ausschnitt 17 vorgesehen ist, der das Einsetzen und Herausheben des Oberschuhs 1 in bzw. aus dem Gehäuse ermöglicht. Am Deckel 16 sind nach innen weisende Stifte oder Leisten 18 montiert, an denen der ortsfeste hintere Strahler 3 über eine rückwärtige Abdeckung 19 befestigt ist. Am Rand des Deckel-Ausschnittes 17 befinden sich mehrere Abstandshalter 20, die zweckmäßig in Form von Rollen aus einem wärmefesten Kunststoff ausgebildet sind.

Im hinteren Abschnitt des Bodens 11 ist eine Fußstütze 21 vorgesehen, auf dessen gewölbtem Endteil der Oberschuh 1 mit seinem Fersenbereich aufliegt. Im vorderen Teil des Gehäuses sind profilierte Gleitleisten 22 auf dem Boden 11 befestigt, auf denen ein kastenförmiger Einschub 23 in Schuhlängsrichtung verschiebbar geführt wird. Auf der Bodenplatte 24 dieses Einschubs 23 ist eine vordere Schuhstütze 25 befestigt, auf welcher die Ballenpartie des Oberschuhs 1 aufliegt. Der kastenförmige Einschub 23 weist eine vordere Stirnwand 26 sowie einen Deckel 27 mit einem mittleren Ausschnitt 28 auf. An der Stirnwand 26 ist ein Handgriff 29 befestigt, der zweckmäßig aus einem warmfesten Kunststoff besteht. In entsprechender Weise wie beim ortsfesten Gestell ist am Deckel 27 des Einschubs der vordere breitere Heizstrahler 2 über Stifte 18 und eine Abdeckung 19 fest montiert. An der Randkante des Deckelausschnitts 28 sind weitere Abstandshalter in Form von Kunststoffrollen gelagert, welche durch Anschlag an die Vorderfläche des Oberschuhs 1 den optimalen Abstand zwischen dem Heizstrahler 2 und dem Schaftrand des Schuhs bestimmen.

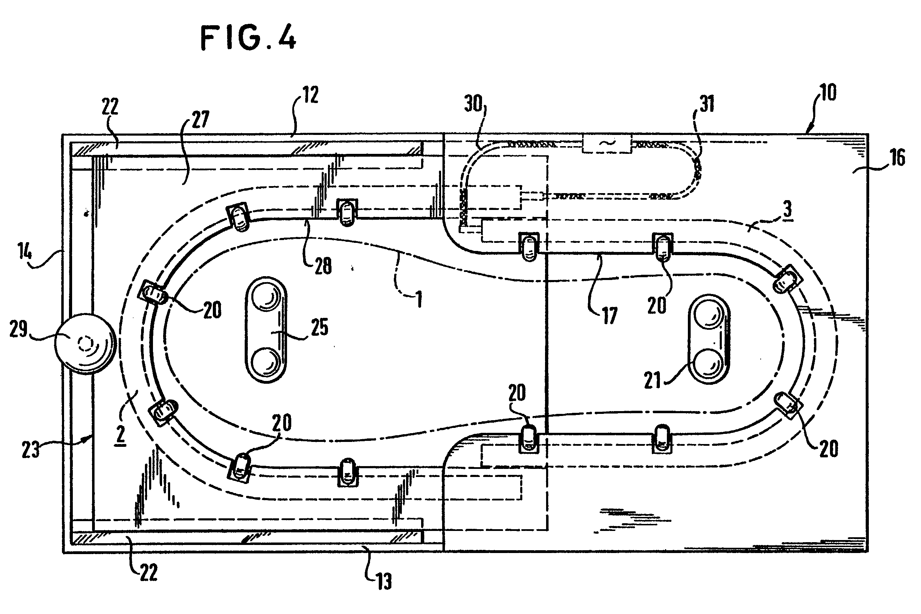

Wie aus Fig. 4 ersichtlich, sind die Abstandshalter 20 im schmaleren Ausschnitt 17 des hinteren Deckelteils 16 und im breiteren Ausschnitt 28 des Einschub-Deckels 27 jeweils mit etwa gleichen Zwischenabständen angeordnet, so daß der in seiner Kontur strichpunktiert dargestellte Oberschuh unter weitgehend gleichen Abständen zu den gestrichelt dargestellten Heizstrahlern 2, 3 positioniert wird. Die Stromzuführung zum ortsfesten Heizleiter 3 erfolgt über ein fest verlegtes Kabel 30, während der längsverschiebbare Heizstrahler 2 über ein Schleppkabel 31 mit Energie versorgt wird.

Wie aus Fig. 5 ersichtlich, ist der Einschub 23 niedriger als das ortsfeste Gehäuse 10, so daß es bei der Behandlung kleiner Schuhe unter den Deckel 16 des ortsfesten Gehäuses 10 eingeschoben werden kann, wie dies auch aus Fig. 3 hervorgeht. Zweckmäßig sind die Stützen 21, 25 in Form von Doppelhöckern ausgebildet, wie dies für die Stütze 25 in Fig. 5 dargestellt ist.

Die Ausführung nach Fig. 6 unterscheidet sich von der nach den Fig. 2 bis 5 nur durch eine besondere Ausbildung der hinteren Schutstütze in Form eines Druck schalters 35. Ein geschwungener Hebel 36 ist mit seinem einen Ende an einem am Boden 11 befestigten Bock 37 angelenkt. Auf dem geschwungenen freien Endstück des Hebels 36 liegt der Schuh auf. Die Unterfläche dieses geschwungenen Endstücks wirkt auf einen Druckkontakt 38 eines Schalters 39. Beim Auflegen des Schuhs auf das geschwungene Endteil des Schwenkhebels 36 wird der Druckkontakt 38 eingedrückt und betätigt dadurch im Schalter 39 vorgesehene Schaltkontakte, die über nicht dargestellte Leitungen zur Steuereinrichtung weitergegeben werden.

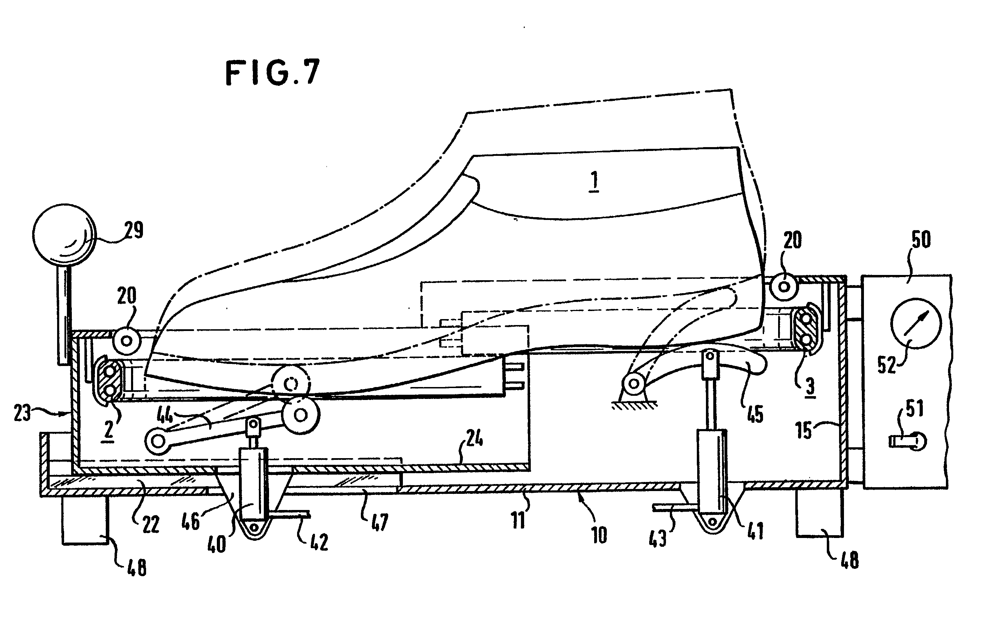

Die Ausführung nach Fig. 7 entspricht im wesentlichen dem Gerät nach den Fig. 2 bis 5, wobei gleiche Bauteile mit den gleichen Bezugszeichen versehen sind. Im Gegensatz zu der vorbeschriebenen Ausführung sind jedoch die Schuhstützen in der Höhe verstellbar ausgebildet, und zwar bei der dargestellten Ausführung mit Hilfe von Druckmittelzylindern 40, 41, die über Leitungen 42, 43 mit Druckluft beaufschlagt werden und in den Bodenplatten so angeordnet sind, daß sie der von den Heizstrahlern erzeugten Wärme entzogen sind. Die Kolbenstangen jedes Druckzylinders 40, 41 sind an Schwenkhebeln 44, 45 angelenkt, welche die eigentlichen Stützglieder für den Oberschuh 1 bilden und entweder bogenförmig oder mit einer Kunststoffrolle versehen sein können. Wie dargestellt, ist der vordere Druckzylinder 40 an einem nach unten weisenden Ansatz 46 angelenkt, welcher an der Bodenplatte 24 des Einschubs 23 montiert ist und einen Ausschnitt 47 in der Bodenplatte 11 des ortsfesten Gehäuses 10 durchragt. Das Gehäuse 10 des Geräts ist auf vorderen bzw. hinteren Fußleisten 48 abgestützt.

Mit einem Zwischenabstand ist an der hinteren Gehäusestirnwand 15 ein Kasten 50 befestigt, in den die verschiedenen Schaltorgane für eine Folgesteuerung der verschiedenen Betriebsabläufe angeordnet sind. In diesem Kasten 50 befindet sich beispielsweise ein Hauptschalter 51, eine Zeituhr 52 sowie Magnetventile zur Betätigung der Druckzylinder 40, 41, mit deren Hilfe der Oberschuh 1 aus der gestrichelten oberen Position in die abgesenkte Aktivierstellung - und umgekehrt - bewegt wird.

Ein in seinem Schaftrand zu aktivierender Oberschuh wird bei der Ausführung nach Fig. 7 auf die in ihre gestrichelte obere Position bewegten Hebel 44, 45 aufgelegt. Nach Betätigen eines Schalters entweder durch das Gewicht des Oberschuhs gemäß Fig. 6 oder von Hand wird durch Einfahren der Kolben in die Druckzylinder 40, 41 der Schuh in seine in Fig. 7 in durchgezogenen Linien dargestellte Aktivierstellung zwischen die beiden U-förmigen Heizstrahler 2, 3 abgesenkt, woraufhin automatisch ein Aktivierschalter im Steuerkasten 50 betätigt wird, der die Stromzufuhr zu den beiden Heizstrahlern auf volle Leistung schaltet. Nach Ablauf der nur einige Sekunden betragenden Aktivierzeit wird die Stromzufuhr zu den Heizstrahlern 2, 3 zurück- oder ganz abgeschaltet und anschließend erfolgt die Heraushebung des Oberschuhs 1 durch automatische Betätigung der Druckzylinder 40, 41.

Die Erfindung ist nicht auf die dargestellten Ausführungsbeispiele beschränkt. So kann beispielsweise der Schuh auch durch eine Öffnung in der Bodenfläche in das Gerät eingebracht werden, wobei entweder eine Hebebewegung des mit seinem Leisten auf einer geeigneten Stützvorrichtung festgelegten Schuhs oder aber eine Absenkbewegung des Gehäuses mit den Heizstrahlern stattfinden kann. Diese Ausführung eines Aktiviergeräts bietet auch die Möglichkeit der Verwendung von weiteren Heizstrahlern, die der Bodenfläche des Schuhs gegenüberliegend angeordnet sind und ein gleichzeitiges oder auch ein aufeinanderfolgendes Aktivieren der Klebstoffschicht der Bodenfläche und des Schaftrandes ermöglicht.

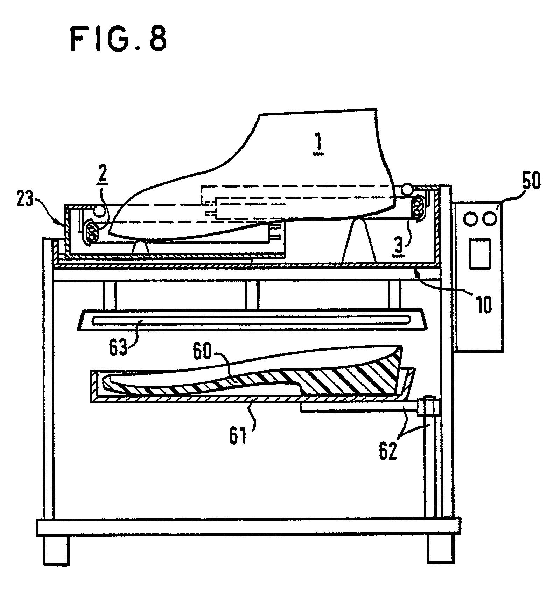

Ein für den praktischen Betrieb besonders zweckmäßiges Aktiviergerät ist in Fig. 8 schematisch dargestellt. Im oberen Teil des Geräts ist ein in den Fig. 1 - 7 dargestelltes Aktiviergerät für die Schaftränder eines Oberschuhs vorgesehen. Unmittelbar darunter befindet sich eine Vorrichtung, mit der die Klebstoffschicht der zum Oberschuh passenden Schuhsohle gleichzeitig aktiviert wird. Diese Sohle 60 liegt auf einem Halter 61, der durch einen Kulissen- oder Schwenk-Mechanismus aus einer frontseitig vorstehenden Einlegestellung in die dargestellte Aktivierstellung unter die nach unten strahlenden stabförmigen Heizstrahler 63 bewegt werden kann. Der wesentliche praktische Vorteil dieses Kombinationsgerätes liegt darin, daß die zueinander passenden Oberschuhe und Sohlen gleichzeitig in das Aktiviergerät eingelegt und anschließend mittels der gemeinsamen Steuereinheit aktiviert werden können. Der gleichzeitige Ablauf der beiden Aktiviervorgänge verkürzt nicht nur die Aktivierzeiten von Oberschuh und Schuhsohle, sondern führt auch zu verbesserten Klebeverbindungen, weil auch die Innenfläche der Sohlenränder von der Streustrahlung der Heizstrahler mit aktiviert werden.

## Patentansprüche

1. Klebstoff-Aktiviergerät für Schuhe, bestehend aus einer Halterung für die aufgeleisteten Oberschuhe und aus mehreren durch eine Steuerung aktivierbaren Heizstrahlern, die in vorbestimmtem Abstand zu der mit dem zu aktivierenden Klebstoff beschichteten Schuhfläche in einem Gehäuse angeordnet sind, **dadurch gekennzeichnet,** daß zwei U-förmig ausgebildete und mit ihren offenen Enden gegeneinander gerichtete Heizstrahler (2, 3) den aufgeleisteten Oberschuh (1, 1a) zumindest teilweise umgeben und zur Anpassung an unterschiedliche Schuhgrößen gegeneinander verstellbar sind.

2. Aktiviergerät nach Anspruch 1, dadurch gekennzeichnet, daß die beiden U-förmigen Heizstrahler (2, 3) unterschiedliche Schenkelweiten haben und in der Höhe gegeneinander versetzt angeordnet sind, so daß sich ihre Schenkelenden im mittleren Schuhbereich höhenmäßig überlappen und gemeinsam eine Heizzone von doppelter Höhe bilden.

3. Aktiviergerät nach Anspruch 2, dadurch gekennzeichnet, daß einer der Heizstrahler (2) in einem Einschub (23) montiert ist, welcher in einem festen Gestell (10) längsverschiebbar geführt ist.

4. Aktiviergerät nach einem der Ansprüche 1 bis 3, dadurch gekennzeichnet, daß die Schuhhalterung gegeneinander verstellbare Schuhstützen (21, 25) aufweist, auf denen der aufgeleistete Oberschuh (1, 1a) in der geeigneten Lager zu den Heizstrahlern (2, 3) aufliegt.

5. Aktiviergerät nach Anspruch 3, dadurch gekennzeichnet, daß das Gehäuse (10) und der Einschub (23) je einen mittig ausgeschnittenen Deckel (16, 27) aufweist, an denen die Heizstrahler (2, 3) in vorgegebenen Abständen und unterschiedlichen Höhen montiert sind.

6. Aktiviergerät nach einem der Ansprüche 1 bis 5, dadurch gekennzeichnet, daß zur Sicherung der vorgegebenen seitlichen Distanz zwischen den Heizstrahlern (2, 3) und dem Schaftrand des Oberschuhs (1, 1a) Abstandshalter (20) am Gehäuse (10) und am Einschub (23) vorgesehen sind.

7. Aktiviergerät nach Anspruch 6 und 7, dadurch gekennzeichnet, daß die Abstandshalter (20) am Rand der Deckelausschnitte (17, 28) gelagerte Kunststoffrollen aufweisen.

8. Aktiviergerät nach einem der Ansprüche 1 bis 7, dadurch gekennzeichnet, daß jeder Fußstütze eine Hubvorrichtung (40, 41) zugeordnet ist.

9. Aktiviergerät nach einem der Ansprüche 1 bis 8, dadurch gekennzeichnet, daß zumindest einer Fußstütze ein beim Auflegen des Oberschuhs (1, 1a) aktivierbarer Druckschalter (35) zugeordnet ist.

10. Aktiviergerät nach einem der Ansprüche 1 bis 9, dadurch gekennzeichnet, daß die beiden U-förmigen Heizstrahler (2, 3) und die Oberschuh-Halterung mit einem Sohlenaktiviergerät kombiniert ist und daß eine gemeinsame Steuerung zur gleichzeitigen Klebstoff-Aktivierung der Oberschuhränder und der Sohleninnenfläche vorgesehen ist.

11. Aktiviergerät nach Anspruch 1, dadurch gekennzeichnet, daß der Oberschuh mit nach oben weisender Sohlenklebefläche auf der Halterung angeordnet ist und von unten zwischen die seitlichen Heizstrahler (2, 3) und vor flächig angeordnete Heizstrahler zur Aktivierung der auf seiner Bodenfläche aufgetragenen Klebstoffschicht bewegbar ist.

12. Aktiviergerät nach einem der vorhergehenden Ansprüche, dadurch gekennzeichnet, daß an einer Außenseite des Gehäuses ein wärmeisolierter Kasten (50) zur Aufnahme der elektrischen und pneumatischen Schaltorgane (51, 52) montiert ist.

## Claims

1. Adhesive activating appliance for shoes, consisting of a holder for the finished uppers and a plurality of radiant heaters which can be activated by a control unit and are arranged in a housing at a predetermined spacing from the shoe surface to be coated with the adhesive to be activated, characterised in that two U-shaped radiant heaters (2, 3), the open ends of which point towards one another, at least partly surround the finished upper (1, 1a) and can be adjusted with respect to one another for the purpose of adapting to different shoe sizes.

2. Activating appliance according to claim 1, characterised in that the spacings between the arms of the two U-shaped radiant heaters (2, 3) are different and the latter are vertically staggered, so that their arm ends overlap vertically in the central shoe area and together form a heating zone of a double height.

3. Activating appliance according to claim 2, characterised in that one of the radiant heaters (2) is mounted in a slide-in unit (23) which can be displaced in the longitudinal direction in a stationary frame (10).

4. Activating appliance according to one of claims 1 to 3, characterised in that the shoe holder comprises shoe supports (21, 25) which can be adjusted with respect to one another and on which the finished upper (1, 1a) rests in the appropriate position in relation to the radiant heaters (2, 3).

5. Activating appliance according to claim 3, characterised in that the housing (10) and the slide-in unit (23) each comprise a cover (16, 27) with a central aperture, on which covers the radiant heaters (2, 3) are mounted at predetermined spacings and different levels.

6. Activating appliance according to one of claims 1 to 5, characterised in that spacers (20) are provided on the housing (10) and the slide-in unit (23) in order to maintain the predetermined lateral spacing between the radiant heaters (2, 3) and the edge of the upper (1, 1a).

7. Activating appliance according to claims 6 and 7, characterised in that the spacers (20) comprise plastic rollers which are mounted at the edge of the cover apertures (17, 28).

8. Activating appliance according to one of claims 1 to 7, characterised in that a lifting device (40, 41) is associated with each bottom support.

9. Activating appliance according to one of claims 1 to 8, characterised in that a pressure switch (35), which can be actuated when the upper (1, 1a) is set down, is associated with at least one of the bottom supports.

10. Activating appliance according to one of claims 1 to 9, characterised in that the two U-shaped radiant heaters (2, 3) and the holder for the upper are combined with a sole activating appliance and that a common contol unit is provided for simultaneously activating the adhesive on the edges of the upper and on the inner surface of the sole.

11. Activating appliance according to claim 1, characterised in that the upper is arranged on the holder with an upwardly facing adhesive sole surface and can be moved from below into a position between the lateral radiant heaters (2, 3) and in front of flatly arranged radiant heaters in order to activate the adhesive layer applied to its bottom surface.

12. Activating appliance according to one of the preceding claims, characterised in that a thermally insulated box (50) for accommodating the electrical and pneumatic switching members (51, 52) is mounted on a surface of the housing.

## Revendications

1. Appareil d'activation de colle pour chaussures, constitué par une monture pour les empeignes posées sur une forme-support et par plusieurs éléments de chauffage par rayonnement pouvant être activés par une commande, lesquels sont agencés à une distance prédéterminée de la surface de chaussure revêtue de la colle à activer, dans une enceinte, caractérisé par le fait que deux éléments de chauffage par rayonnement (2, 3), lesquels sont en forme de U et ont leurs extrémités ouvertes dirigées dans des sens opposés, entourent au moins partiellement l'empeigne (1, 1a) sur forme-support et peuvent être déplacés l'un vers l'autre aux fins d'adaptation à différentes tailles de chaussure.

2. Appareil d'activation selon revendication 1, caractérisé par le fait que les deux éléments de chauffage par rayonnement (2, 3) qui sont en forme de U ont des écartements de branches différents et sont agencés avec décalage mutuel en hauteur, de manière que les extrémités de leurs branches se recouvrent en hauteur dans la région médiane de la chaussure et forment ensemble une zone de chauffage dont la hauteur est doublée.

3. Appareil d'activation selon revendication 2, caractérisé par le fait que l'un des éléments de chauffage par rayonnement (2) est monté dans un tiroir (23) qui est guidé à coulissement longitudinal dans un bâti fixe (10).

4. Appareil d'activation selon l'une des revendications 1 à 3, caractérisé par le fait que la monture de chaussure présente des supports de chaussure (21, 25) déplaçables les uns par rapport aux autres, sur lesquels l'empeigne (1, 1a) sur forme-support repose dans la position appropriée par rapport aux éléments de chauffage par rayonnement (2, 3).

5. Appareil d'activation selon revendication 3, caractérisé par le fait que l'enceinte (10) et le tiroir (23) présentent chacun un couvercle (16, 27) à découpe médiane, couvercles sur lesquels les éléments de chauffage par rayonnement (2, 3) sont montés à des distances prédéterminées et des hauteurs différentes.

6. Appareil d'activation selon l'une des revendications 1 à 5, caractérisé par le fait que des organes d'écartement (20) sont prévus sur l'enceinte (10) et sur le tiroir (23), pour assurer la distance latérale prédéterminée entre les éléments de chauffage par rayonnement (2, 3) et le bord de tige de l'empeigne (1, 1a).

7. Appareil d'activation selon revendications 6 et 7, caractérisé par le fait que les organes d'écartement (20) présentent des rouleaux de matière plastique montés sur le bord des découpes (17, 28) des couvercles.

8. Appareil d'activation selon l'une des revendications 1 à 7, caractérisé par le fait qu'un dispositif de déplacement en hauteur (40, 41) est associé à chaque support.

9. Appareil d'activation selon l'une des revendications 1 à 8, caractérisé par le fait qu'un interrupteur à poussoir (35) activable lors de la pose de l'empeigne (1, 1a) est associé à au moins un support.

10. Appareil d'activation selon l'une des revendications 1 à 9, caractérisé par le fait que les deux éléments de chauffage par rayonnement (2, 3) qui sont en forme de U et la monture d'empeigne sont combinés à un appareil d'activation de semelle, et par le fait qu'il est prévu une commande commune pour l'activation simultanée de la colle des bords de l'empeigne et de la surface intérieure de la semelle.

11. Appareil d'activation selon revendication 1, caractérisé par le fait que l'empeigne est agencée sur la monture avec surface de collage de semelle tournée vers le haut et peut être déplacée, depuis le bas, entre les éléments de chauffage par rayonnement (2, 3) latéraux et devant des éléments de chauffage par rayonnement agencés en nappe, pour activer la couche de colle appliquée sur sa surface de fond.

12. Appareil d'activation selon l'une des revendications précédentes, caractérisé par le fait qu'une boîte isolée thermiquement (50), destinée à recevoir les organes (51, 52) de commande électriques et pneumatiques, est montée sur un côté extérieur de l'enceinte.

FIG.1

FIG.2

EP 0 230 495 B1

# FIG. 3

EP 0 230 495 B1

# FIG.4

EP 0 230 495 B1

# FIG. 5

# FIG. 6

# FIG.7

EP 0 230 495 B1

# FIG. 8